# EUROPÄISCHE PATENTSCHRIFT

(11) **EP 1 053 165 B1**
(45) Veröffentlichungstag und Bekanntmachung des Hinweises auf die Patenterteilung: **09.04.2003**
(21) Anmeldenummer: 99958131.7
(22) Anmeldetag: 27.11.1999
(51) Int. Cl.: B62D 17/00, B60G 17/015, B60G 7/00, B60G 3/26

(54) **REGELBARES AUFHÄNGUNGSSYSTEM FÜR EIN AKTIVES FAHRWERK EINES KRAFTFAHRZEUGS**
CONTROLLABLE WHEEL SUSPENSION SYSTEM FOR AN ACTIVE RUNNING GEAR OF A MOTOR VEHICLE
SYSTEME DE SUSPENSION REGLABLE POUR UN CHASSIS ACTIF D'UN VEHICULE AUTOMOBILE

(30) Priorität: 12.12.1998 DE 19857394
(43) Veröffentlichungstag der Anmeldung: 22.11.2000
(73) Patentinhaber: DaimlerChrysler AG, 70567 Stuttgart (DE)
(72) Erfinder: GÖTZEN, Hartmut, D-71384 Weinstadt (DE); HIPP, Ulrich, D-73249 Wernau (DE); SUISSA, Avshalom, D-71272 Renningen (DE)
(86) Internationale Anmeldenummer: EP9909237
(87) Internationale Veröffentlichungsnummer: WO00035737

(56) Entgegenhaltungen:
- DE-A- 3 736 229
- DE-C- 4 438 929
- GB-A- 2 271 968
- US-A- 4 700 972
- PATENT ABSTRACTS OF JAPAN vol. 018, no. 526 (M-1683), 5. Oktober 1994 (1994-10-05) & JP 06 183242 A (MITSUBISHI MOTORS CORP), 5. Juli 1994 (1994-07-05)
- PATENT ABSTRACTS OF JAPAN vol. 011, no. 347 (M-641), 13. November 1987 (1987-11-13) & JP 62 125907 A (ISUZU MOTORS LTD), 8. Juni 1987 (1987-06-08)
- PATENT ABSTRACTS OF JAPAN vol. 1999, no. 01, 29. Januar 1999 (1999-01-29) & JP 10 264636 A (DENSO CORP), 6. Oktober 1998 (1998-10-06)

## Beschreibung

Die Erfindung betrifft ein regelbares Aufhängungssystem für ein aktives Fahrwerk eines Kraftfahrzeugs nach dem Oberbegriff des Anspruches 1. Ein derartiges Aufhängungssystem ist aus der JP 62125907 A bekannt.

Aus der DE 44 38 929 C1 ist eine hydraulische Lenkaktuatoranordnung für eine parameterabhängige gesteuerte Fahrzeuglenkung bekannt, die einen an einem lenkbaren Rad angeordneten Lenkhebel, welcher mit der Kolbenstange eines hydraulischen Lenkaktuators verbunden ist, umfaßt. Der Lenkaktuator wird mittels Stellsignalen eingestellt, die in einem Rechner in Abhängigkeit verschiedener Parameter, beispielsweise Drehstellung des Lenkrades, Fahrgeschwindigkeit oder Giergeschwindigkeit des Fahrzeugs erzeugt werden. Die Einstellung des Lenkaktuators kann geregelt durch einen Soll-Ist-Vergleich zwischen gemessenen und berechneten Zustandsgrößen erfolgen.

Darüberhinaus sind verschiedenartige Aufhängungssysteme für Kraftfahrzeuge bekannt, die eine Mehrzahl von Komponenten wie Feder, Dämpfer und Lenkern umfassen und die es ermöglichen, die Bewegungsmöglichkeiten des Rades, insbesondere Lenkwinkel, Hub, Sturz und Spur, gezielt aktiv oder passiv zu beeinflussen, siehe einen Beispiel die JP 62125907 A.

Aus Sicherheitsgründen muß eine größtmögliche Funktionstüchtigkeit der die Lenkung bestimmenden Komponenten gewährleistet werden. Insbesondere bei Drive-by-wire-Systemen, bei denen keine unmittelbare mechanische Umsetzung der Lenkbewegung des Fahrers auf die gelenkten Räder mehr existiert, muß ein Funktionsausfall im Lenk-Übertragungsweg durch in der Regel redundante Auslegung kompensiert werden können. Hierdurch fallen jedoch erhöhte Herstellungs-, Montage- und Betriebskosten der Aufhängungssysteme an; außerdem benötigen redundant ausgelegte Aufhängungssysteme mehr Bauraum.

Der Erfindung liegt das Problem zugrunde, ein regelbares Aufhängungssystem für ein aktives Fahrwerk zu schaffen, das mit einfachen Mitteln ein hohes Maß an Sicherheit und Flexibilität gewährleistet.

Dieses Problem wird erfindungsgemäß mit den Merkmalen des Anspruches 1 gelöst.

Die Redundanz im neuartigen Aufhängungssystem wird dadurch erreicht, daß zumindest zwei Aktuatoren das Rad beaufschlagen, wobei die von den Aktuatoren erzeugten Stellbewegungen bzw. Stellvektoren parallele Richtungskomponenten aufweisen. Dies wird mittels eines von 90° abweichenden Winkels zwischen den Stellrichtungen zweier Aktuatoren erreicht, was zur Folge hat, daß sich die Wirkrichtungen der beiden Aktuatoren zumindest teilweise überlagern. Diese konstruktive Anordnung der Aktuatoren ermöglicht es, daß im Fehlerfall bei einem Defekt eines Aktuators dessen Funktion vom zweiten Aktuator zumindest teilweise übernommen werden kann. Über eine Regeleinheit wird der Funktionszustand der Aktuatoren regelmäßig überprüft und bei einem detektierten Ausfall eines Aktuators werden den verbleibenden intakten Aktuator beaufschlagende Stellsignale erzeugt. Diese Stellsignale veranlassen den intakten Aktuator dazu, die Funktion des defekten Aktuators zu übernehmen, indem die Stellbewegung des intakten Aktuators in Wirkrichtung des defekten Aktuators soweit verstärkt bzw. adaptiert wird, bis die Funktion des defekten Aktuators gänzlich oder teilweise übernommen wird.

Mit diesem neuartigen Konzept kann die Anzahl der Bauteile im Aufhängungssystem verringert werden, weil nun nicht mehr für jeden Aktuator jeweils ein Ersatz-Stellglied vorgesehen werden muß, um die erforderliche Funktionssicherheit zu gewährleisten. Vielmehr genügt es, maximal einen zusätzlichen Aktuator anzuordnen und dennoch Redundanz für mehrere der eingesetzten Aktuatoren zu erreichen, indem der zusätzliche Aktuator Zusatzfunktionen übernimmt, die den Primärfunktionen der anderen Aktuatoren entsprechen. Weiterhin kann eine abgestufte Sicherheitsstrategie realisiert werden, indem nur diejenigen Aktuatoren, die besonders sicherheitsrelevant sind, redundant abgesichert werden.

In einer ersten zweckmäßigen Ausführung weist die Stellrichtung des zusätzlichen Aktuators eine Richtungskomponente auf, die parallel zur Stellrichtung von mindestens zwei weiteren Aktuatoren verläuft. Im Fehlerfall ist der zusätzliche Aktuator in der Lage, die Funktion des jeweiligen defekten Aktuators zu übernehmen, so daß mit nur einem zusätzlichen Aktuator eine Funktionsausfallsicherung von mindestens zwei Aktuatoren gewährleistet werden kann.

In einer anderen zweckmäßigen Ausführung übernimmt ein Aktuator, über den eine weniger sicherheitsrelevante Funktion des Aufhängungssystems einstellbar ist, im Fehlerfall zusätzlich die Funktion eines defekten, sicherheitstechnisch wichtigeren Aktuators, wobei gegebenenfalls in Kauf genommen werden kann, daß der intakte Aktuator seine ursprüngliche Funktion nicht mehr oder nicht mehr vollständig ausüben kann. Beispielsweise ist es möglich, eine defekte Lenkfunktion eines Aktuators von einem weiteren Aktuator übernehmen zu lassen, der primär für die Einstellung des Sturzes oder der Spur des Rades verantwortlich ist. Der die Lenkfunktion übernehmende Aktuator erzeugt eine Stellbewegung mit einer Richtungskomponente, die parallel zur Stellrichtung des defekten, primär für die Lenkung verantwortlichen Aktuators liegt. Über die Regelung kann der intakte Aktuator in der Weise angesteuert werden, daß die die Lenkung beeinflussende Richtungskomponente in gleicher oder zumindest annähernd gleicher Weise ausgeprägt ist wie Stellbewegung des Lenk-Aktuators, so daß die Lenkfunktion weiterhin ohne Sicherheitseinschränkung ausgeübt werden kann.

Bei der zusätzlichen Übernahme der Funktion eines defekten Aktuators durch einen primär für eine andere Funktion eingesetzten Aktuators entspricht die Anzahl aller eingesetzten Aktuatoren der Anzahl der beeinflußbaren Bewegungsmöglichkeiten des Rades. Es werden in dieser Ausführung keine zusätzlichen Aktuatoren benötigt, dennoch wird infolge der die Funktionsübernahme eine redundante Auslegung erreicht.

Gegebenenfalls kann es zweckmäßig sein, zwei oder mehr Aktuatoren so auszubilden, daß im Fehlerfall eine gegenseitige Funktionsübernahme möglich ist. In diesem allgemeinen Fall sind die Stellbewegungen der Aktuatoren im Normalfall, bei voller Funktionsfähigkeit aller Aktuatoren, entkoppelt, so daß jeder Aktuator nur die ihm zugewiesene Primärfunktion ausführt. Im Fehlerfall, bei einem teilweisen oder vollständigen Ausfall eines oder mehrerer Aktuatoren, werden die Funktionen der intakten Aktuatoren verkoppelt, deren Hauptfunktionen entweder weiterhin zumindest annähernd weiter ausgeführt werden oder zugunsten wichtigerer Funktionen defekter Aktuatoren aufgegeben werden. Die Entkopplung und Verkopplung der Aktuatoren erfolgt mit Hilfe der Stellsignale, die in der Regelung erzeugt werden.

In einer bevorzugten Weiterbildung sind die Kraftangriffspunkte von zwei zusammenwirkenden Aktuatoren jeweils mit Abstand zur Lenkachse angeordnet, wodurch beide Aktuatoren in der Lage sind, den Lenkwinkel zu beeinflussen. Fällt einer der Aktuatoren aus, so kann der verbleibende Aktuator für die Lenkung herangezogen werden.

Vorteilhaft weisen die Kraftangriffspunkte der beiden Aktuatoren zusätzlich einen Abstand zu einer weiteren Rad-Drehachse auf und sind damit beide in der Lage, ein um diese Rad-Drehachse wirkendes Drehmoment zur Einstellung eines weiteren Rad-Freiheitsgrades zu erzeugen, insbesondere Sturz oder Spur. Bei einem Ausfall eines Aktuators kann der verbleibende funktionstüchtige Aktuator die Lenkfunktion übernehmen, gegebenenfalls unter Zurückstellung der Funktion zur Einstellung des zusätzlichen Rad-Freiheitsgrades.

Weitere Vorteile und zweckmäßige Ausführungsformen sind den weiteren Ansprüchen, der Figurenbeschreibung und den Zeichnungen zu entnehmen. Es zeigen:
- Fig. 1: eine perspektivische Ansicht eines Radmoduls mit einer Mehrzahl von Aktuatoren,
- Fig. 2 bis: weitere Radmodul-Ausführungsbeispiele mit einer
- Fig. 12: unterschiedlichen Anzahl an Aktuatoren bzw. unterschiedlichen Aktuator-Anordnungen.

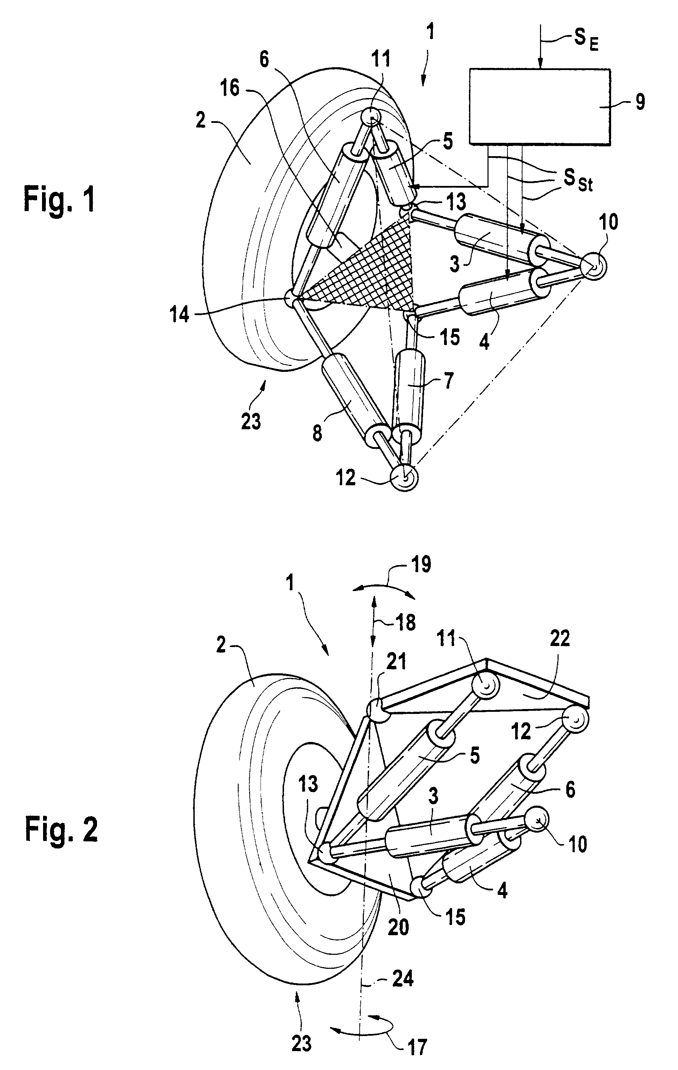

Bei den in den Fig. 1 bis 12 dargestellten Ausführungsbeispielen sind gleiche Bauteile mit gleichen Bezugszeichen versehen. Im folgenden wird die Raddrehung als selbstverständlich vorausgesetzt und nicht als eigenständiger Freiheitsgrad aufgezählt. Vertikales Einfedern hat in der Regel auch eine Dämpfung der Vertikalbewegung des Rades zur Folge. In sämtlichen Ausführungsbeispielen wird eine Regeleinheit zur Erzeugung von die Aktuatoren beaufschlagenden Stellsignalen vorausgesetzt.

Das in Fig. 1 gezeigte Radmodul bzw. Aufhängungssystem 1 für ein Rad 2 ist Teil eines aktiven, regelbaren Fahrwerks in einem Kraftfahrzeug. Das Aufhängungssystem umfaßt eine Mehrzahl von Aktuatoren 3 bis 8, die zu einem räumlichen System zusammengeschaltet sind und das Rad 2 bzw. den Radträger des Rades 2 beaufschlagen. Die Aktuatoren 3 bis 8 sind als translatorisch wirkende Kolben-Zylinder-Verstelleinrichtungen ausgebildet. Die Aktuatoren 3 bis 8 werden über Stellsignale S_{St}, die in einer Regeleinheit 9 gemäß einer vorgegebenen Regelvorschrift erzeugt werden, in Abhängigkeit von Eingangssignalen S_{E}, welche beispielsweise über Meßgeber aufgenommen werden und Zustands- und Betriebsgrößen des Kraftfahrzeugs repräsentieren, auf die gewünschte Position eingestellt.

Die sechs Aktuatoren 3 bis 8 bilden ein räumliches 6-Bein und ermöglichen es, insgesamt sechs Rad-Freiheitsgrade zu realisieren: Lenken, Einfedern, Sturzeinstellung, Spureinstellung sowie Radstandsänderung längs und quer. Die Aktuatoren sind an ihrem jeweils dem Radträger abgewandten Ende mit der Fahrzeugkarosserie verbunden, wobei jeweils zwei Aktuatoren 3, 4 bzw. 5, 6 bzw. 7, 8 an einem gemeinsamen Befestigungspunkt 10 bzw. 11 bzw. 12 an der Karosserie befestigt sind, so daß der gemeinsame Befestigungspunkt 10, 11 bzw. 12 mit gegenüberliegenden Kraftangriffspunkten 13, 15 bzw. 13, 14 bzw. 14, 15 von jeweils zwei zugeordneten Aktuatoren 3, 4 bzw. 5, 6 bzw. 7, 8 jeweils ein Dreieck bildet. Jeweils zwei benachbarte Aktuatoren 3, 5 bzw. 6, 8 bzw. 4, 7 teilen sich einen gemeinsamen Kraftangriffspunkt 13 bzw. 14 bzw. 15, wobei sich die Stellrichtung benachbarter Aktuatoren in einem gemeinsamen Kraftangriffspunkt entsprechend dem zwischen zwei Aktuatoren eingeschlossenen Winkel unterscheidet.

Jeweils zwei in einem gemeinsamen Befestigungspunkt aufgehängte Aktuatoren liegen in einer gemeinsamen Ebene; die in unterschiedlichen Befestigungspunkten aufgehängten Aktuatoren liegen in unterschiedlichen Ebenen. Die Ebene der Aktuatoren 5, 6 verläuft mit geringer Neigung gegenüber einer Vertikalen. Die Kraftangriffspunkte 13, 14 der Aktuatoren 5, 6 liegen unmittelbar benachbart zum Rad 2 in einer etwa horizontalen Linie; die Kraftangriffspunkte 13, 14 weisen einen seitlichen Abstand zur Radachse 16 und einen vertikalen Abstand zum Radaufstandspunkt 23 auf.

Der Kraftangriffspunkt 15 der Aktuatoren 4 und 7 befindet sich in horizontaler Entfernung zum Radkörper auf der Radachse 16. Die drei Kraftangriffspunkte 13, 14, 15 bilden das schraffiert eingezeichnete Dreieck, das geringfügig oberhalb der Radachse 16 näherungsweise horizontal verläuft. Die drei Ebenen, die durch jeweils zwei in einem gemeinsamen Befestigungspunkt aufgehängte Aktuatoren gebildet werden, begrenzen drei Seiten eines Tetraeders.

Die auszuführenden Freiheitsgrade Lenken, Federn, Sturzeinstellung, Spurvergrößerung und Radstandsänderung können bei Funktionsfähigkeit aller sechs Aktuatoren 3 bis 8 simultan ausgeübt werden. Mit Hilfe der in der Regelungseinheit 9 erzeugten Stellsignale S_{St} wird die Funktion der einzelnen Aktuatoren in der Weise aufeinander abgestimmt, daß trotz der gemeinsamen Kraftangriffspunkte im Normalbetrieb - bei voll funktionsfähigen Aktuatoren - eine Entkopplung der Freiheitsgrade erreicht wird, so daß die Freiheitsgrade ohne gegenseitige Beeinflussung betätigt werden können.

Im Falle eines defekten Aktuators wird dieser in seiner momentanen Position oder in einer energetisch günstigen Position, beispielsweise in seiner Mittellage, arretiert, die auch unter dem Einfluß äußerer Kräfte beibehalten wird. Der defekte Aktuator übernimmt dann die Funktion einer festen Übertragungsstange. Die Arretierung des defekten Aktuators kann beispielsweise mittels eines Elektromotors mit selbsthemmendem Schneckengetriebe erfolgen.

Es kann aber auch zweckmäßig sein, jede Arretierung eines defekten Aktuators zu unterlassen und ihn unter dem Einfluß äußerer Kräfte gleiten zu lassen.

Im Fehlerfall können auch bei einem Ausfall von einem oder mehreren Aktuatoren die Funktionen Lenken, Federn und Sturzeinstellung noch ausgeübt werden. Da jeder Aktuator eine Stellrichtung mit Kraftkomponenten senkrecht zu der die Lenkachse enthaltenden Lenkebene aufweist, ist es möglich, selbst bei Ausfall von fünf Aktuatoren mit nur einem beliebigen intakten Aktuator die Radlenkung durchzuführen. Aufgrund der räumlichen Anordnung, bei der jeder Aktuator in bezug auf das Rad 2 eine von den benachbarten Aktuatoren abweichende Stellrichtung einnimmt und daher mit jedem benachbarten Aktuator eine parallele Richtungskomponente aufweist, ist es möglich, die Funktionen Lenken, Federn und Sturzeinstellung mit lediglich drei intakten, beliebigen Aktuatoren zu bewerkstelligen, wobei die übrigen Freiheitsgrade aufgegeben werden. Insgesamt wird hierdurch eine erhebliche Sicherheitsreserve gewonnen.

In der Regel verbleibt eine reduzierte Beeinflussung der übrigen, aufgegebenen Freiheitsgrade.

In Fig. 2 ist ein weiteres Ausführungsbeispiel eines Aufhängungssystems 1 für ein Rad 2 mit insgesamt vier Aktuatoren 3 bis 6 dargestellt, mit denen die vier Freiheitsgrade Lenken, Federn, Sturzeinstellung und Spureinstellung beeinflußt werden können; in der Figur sind mit den Bewegungspfeilen 17, 18 und 19 die Bewegungsmöglichkeiten Lenken, Federn und Sturzeinstellung des Rades 2 dargestellt.

Die vier Aktuatoren 3 bis 6 sind wie im vorhergehenden Ausführungsbeispiel räumlich angeordnet. Jeweils zwei Aktuatoren 3, 5 bzw. 4, 6 münden in einen gemeinsamen, radseitigen Kraftangriffspunkt 13 bzw. 15, wobei die beiden Kraftangriffspunkte 13, 15 zusammen mit einem weiteren Anlenkpunkt 21 zugleich Eckpunkte eines Dreiecklenkers 20 bilden, der radseitig angeordnet ist und die Stellbewegungen der Aktuatoren 3 bis 6 auf das Rad 2 überträgt. Der Dreiecklenker 20 verläuft näherungsweise vertikal und liegt annähernd parallel zur Rad-Drehebene. Die beiden Kraftangriffspunkte 13 und 15 liegen mit seitlichem Abstand zur Lenkachse 24 und mit vertikalem Abstand zum Radaufstandspunkt 23.

Die beiden Aktuatoren 3 und 4 mit den untenliegenden Kraftangriffspunkten 13 und 15 weisen einen gemeinsamen, karosserieseitigen Befestigungspunkt 10 auf, verlaufen annähernd horizontal und schließen einen gemeinsamen Winkel ein.

Die beiden Aktuatoren 5 und 6 liegen etwa parallel zueinander; sie sind karosserieseitig über zwei Befestigungspunkte 11, 12 an einem weiteren, näherungsweise horizontalen Dreiecklenker 22 aufgehängt, dessen dritter Eckpunkt identisch mit dem Anlenkpunkt 21 des ersten Dreiecklenkers 20 ist. Die Befestigungspunkte 11, 12 liegen oberhalb des Befestigungspunktes 10 der Aktuatoren 3 und 4. Die Aktuatoren 5 und 6 liegen schräg im Aufhängungssystem 1, die Stellrichtung der Aktuatoren 5 und 6 ist zueinander identisch, unterscheidet sich jedoch von der Stellrichtung der beiden anderen Aktuatoren 3, 4. Da die Stellrichtung der Aktuatoren 5, 6 mit der Stellrichtung der Aktuatoren 3 bzw. 4 einen von 90° abweichenden Winkel einschließt, stimmt eine Richtungskomponente der Stellrichtung jedes Aktuators 5, 6 mit einer Richtungskomponente der Stellrichtung sowohl des Aktuators 3 als auch des Aktuators 4 überein.

Im Falle eines von einer in Fig. 2 nicht dargestellten Regeleinheit detektierten Ausfalls eines Aktuators wird dieser kraftlos gesetzt, so daß der Kolben im Zylinder des Aktuators frei gleiten kann. Solange zumindest ein Aktuator noch intakt ist, kann im Fehlerfall zumindest die Lenkfunktion weiterhin ausgeübt werden.

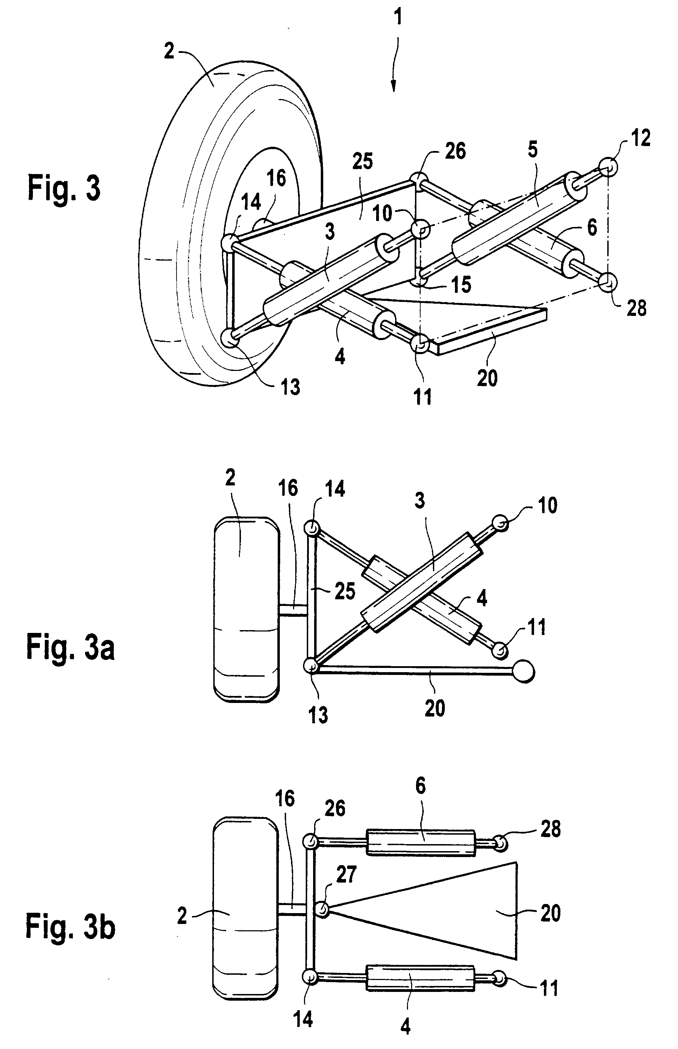

In den Fig. 3, 3a und 3b ist ein weiteres Ausführungsbeispiel dargestellt. Fig. 3 zeigt eine räumliche Darstellung, Fig. 3a eine Seitenansicht und Fig. 3b eine Draufsicht auf das Ausführungsbeispiel. Das Aufhängungssystem 1 des Rades 2 umfaßt insgesamt vier Aktuatoren 3 bis 6, die an vier verschiedenen Befestigungspunkten 10, 11, 12, 28 karosserieseitig aufgehängt sind und über vier unterschiedliche Kraftangriffspunkte 13, 14, 15, 26 mit einem radseitigen Lenker 25 verbunden sind. Sowohl die Kraftangriffspunkte als auch die Befestigungspunkte der Aktuatoren bilden jeweils ein Rechteck. Jeweils zwei beabstandete Aktuatoren 3, 5 bzw. 4, 6 liegen parallel zueinander; Aktuatoren 3, 4 bzw. 5, 6 mit etwa vertikal übereinanderliegenden Befestigungspunkten und Kraftangriffspunkten liegen winklig zueinander. Weiterhin ist ein Dreiecklenker 20 vorgesehen, der etwa horizontal verläuft und über einen Anlenkpunkt 27 mit der Radachse 16 und dem Lenker 25 verbunden ist.

Das Aufhängungssystem besitzt insgesamt die drei Freiheitsgrade Lenken, Federn und Sturzeinstellung. Da die Anzahl der Aktuatoren die Anzahl der Freiheitsgrade übersteigt, ist das System redundant ausgelegt. Im Normalfall kann aufgrund der redundanten Auslegung der überzählige Aktuator zur Kraftregelung verwendet werden, um Verspannungen, die durch asynchron laufende Aktuatoren hervorgerufen werden können, zu verhindern.

Bei einem Ausfall nur eines Aktuators wird der defekte Aktuator in Gleitstellung versetzt und es können alle Freiheitsgrade ohne gegenseitige Beeinträchtigung durchgeführt werden. Bei einem Ausfall von zwei Aktuatoren kann die Lenkfähigkeit des Systems beibehalten werden, jedoch mit Verkopplung mit den Funktionen Federn und Sturzeinstellung.

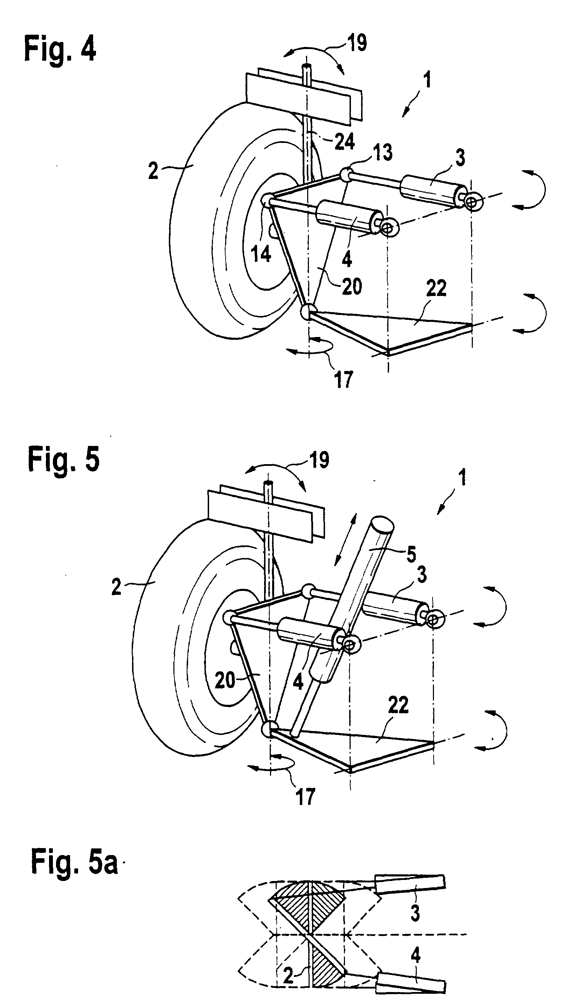

Das Aufhängungssystem 1 gemäß Fig. 4 umfaßt zwei etwa horizontale Aktuatoren 3 und 4, die etwa parallel verlaufen und über die Kraftangriffspunkte 13, 14 mit einem etwa vertikalen, radseitigen Dreiecklenker 20 verbunden sind, welcher an einem weiteren Dreiecklenker 22 befestigt ist. Das System besitzt zwei Freiheitsgrade: das Rad 2 kann um seine Lenkachse 24 gemäß dem Bewegungspfeil 17 gelenkt werden und es kann gemäß dem Bewegungspfeil 19 der Radsturz eingestellt werden. Bei einem Ausfall eines Aktuators kann die Lenkfähigkeit aufrecht erhalten werden.

Das Ausführungsbeispiel mit dem Aufhängungssystem nach Fig. 5 entspricht im Aufbau demjenigen nach Fig. 4, weist jedoch einen zusätzlichen Aktuator 5 auf, der als zusätzlichen Freiheitsgrad ein Einfedern des Rades 2 erlaubt. Zudem besteht die Möglichkeit, zusätzlich zum Lenken, zur Sturzeinstellung und zum Einfedern auch die Spur des Rades zu verstellen. Aufgrund der Kopplung von Lenken und Sturzeinstellung oder von Sturzeinstellung und Spureinstellung beträgt die Zahl der Freiheitsgrade drei. Es besteht keine Verspannungsgefahr des Aufhängungssystems 1 infolge asynchron laufender Aktuatoren. Die Ausführung nach Fig. 5 kann ebenso wie die Ausführung nach Fig. 4 auch als Achsmodul durch Spiegelung der Anordnung auf die andere Fahrzeugseite verwendet werden, wobei gemeinsame horizontale Aktuatoren eingesetzt werden können, so daß an beiden lenkbaren Fahrzeugrädern gleiche Lenk- und Sturzwinkel einstellbar sind.

Bei einem Ausfall eines Aktuators wird dieser in Arretierstellung versetzt. Die Lenkfähigkeit wird durch den Ausfall eines Aktuators nicht beeinträchtigt, jedoch besteht in jedem Fall eine Kopplung zwischen Lenken und Sturzeinstellung.

Fig. 5a zeigt den zugehörigen Bewegungsraum des Rades 2. Bei einer gleichzeitigen, gleichgerichteten Elongation der Aktuatoren 3 und 4 wird das Rad 2 gestürzt. Bei einer gegensinnigen Elongation wird die Spur des Rades eingestellt bzw. es wird gelenkt.

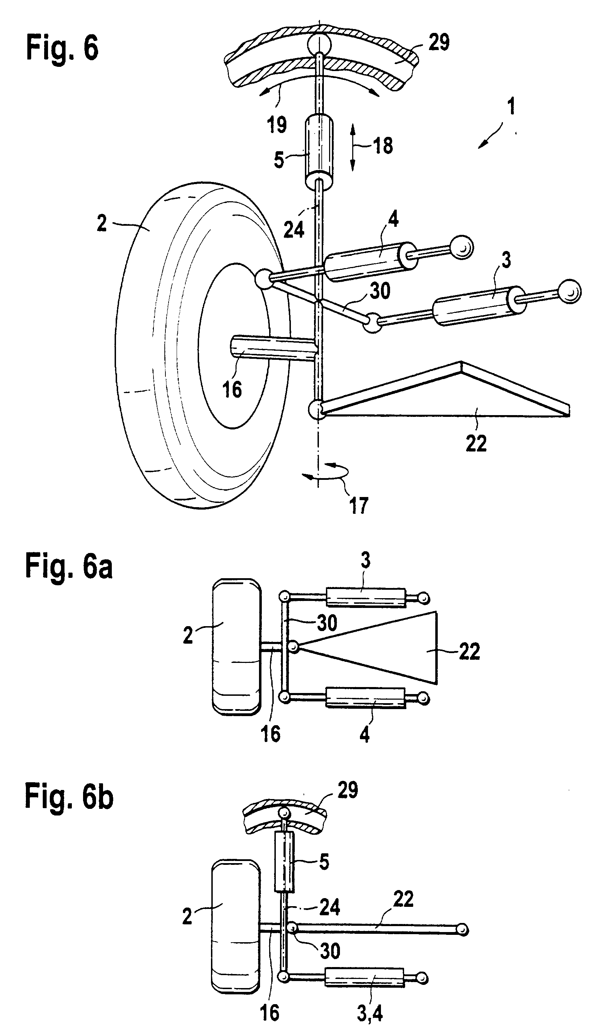

In den Fig. 6, 6a und 6b ist eine modifizierte Ausführung des Beispiels aus Fig. 5 dargestellt, wobei Fig. 6 eine räumliche Darstellung, Fig. 6a eine Draufsicht und Fig. 6b eine Seitenansicht, jedoch mit versetzten Aktuatoren zeigt. Das Aufhängungssystem 1 für das Rad 2 umfaßt zwei horizontale Aktuatoren 3, 4, die am einem radseitigen Querlenker 30 angreifen, sowie einem vertikalen Aktuator 5 an der Lenkachse 24. Die Lenkachse 24 ist mit der Radachse 16 verbunden. Das untere Ende der Lenkachse 24 ist mit einem Dreiecklenker 22 verbunden, der an der Karosserie aufgehängt ist; das obere Ende der Lenkachse 24 ist beweglich in einer teilkreisförmigen Querführung 29 geführt, die an der Karosserie befestigt ist.

Das System besitzt die drei Freiheitsgrade Lenken, Einfedern und Sturzeinstellung gemäß den Bewegungspfeilen 17, 18 und 19. Die Spureinstellung ist mit der Sturzeinstellung gekoppelt. Die Querführung 29 gewährleistet eine exakte Bewegung der Lenkachse 24 bei der Einstellung des Sturzes.

Wie ein Vergleich der Fig. 6 und 6b zeigt, können die horizontalen, parallel angeordneten Aktuatoren 3, 4 sowohl oberhalb als auch unterhalb des Querlenkers 30 angeordnet sein.

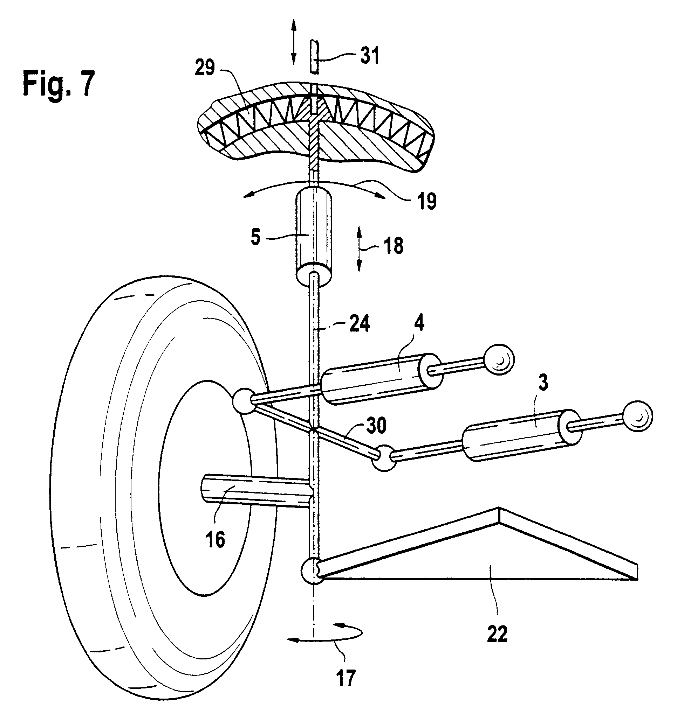

Fig. 7 zeigt eine ähnliche Vorrichtung wie Fig. 6, jedoch mit dem Unterschied, daß die Querführung 29 mittels eines Hilfsaktuators 31 arretiert werden kann, so daß die Sturzbewegung der Lenkachse 24 blockiert ist.

Im Fehlerfall wird der defekte Aktuator im Unterschied zum vorhergehenden Ausführungsbeispiel in Gleitstellung versetzt. Zugleich wird der Hilfsaktuator aktiviert und die Sturzbewegung der Lenkachse verhindert. Die Lenkfunktion kann ohne Einschränkung ausgeführt werden.

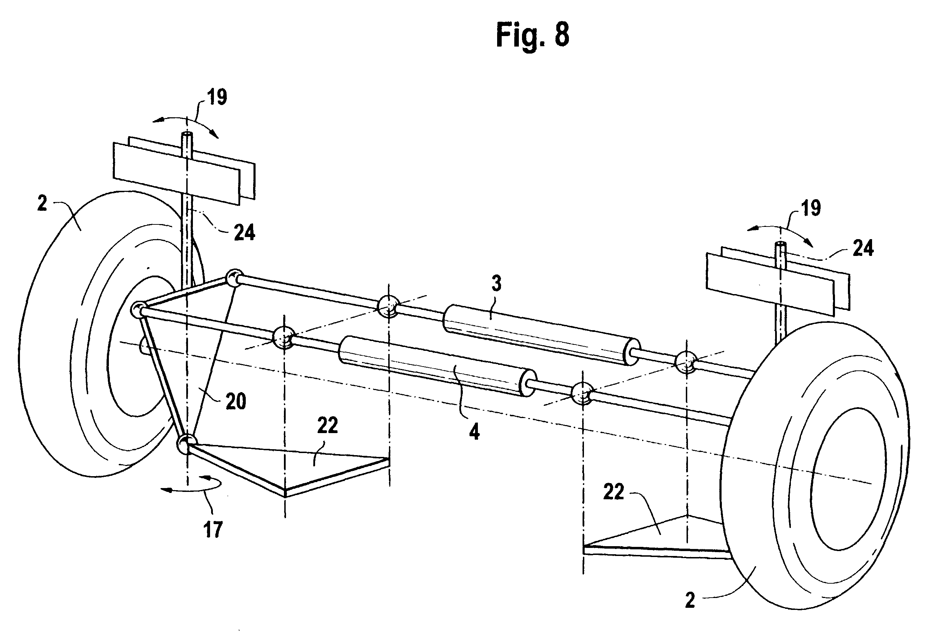

Fig. 8 zeigt eine spiegelbildliche Anordnung der Ausführung nach Fig. 4 mit zwei gemeinsamen Aktuatoren 3, 4 für zwei gelenkte Räder einer Achse. Aufgrund der für beide Räder gemeinsam genutzten Aktuatoren 3, 4 besitzt das Gesamtsystem mit beiden Rädern lediglich die zwei Freiheitsgrade Lenken und Sturzeinstellung; diese Freiheitsgrade werden für beide Räder in gleicher Weise ausgeführt.

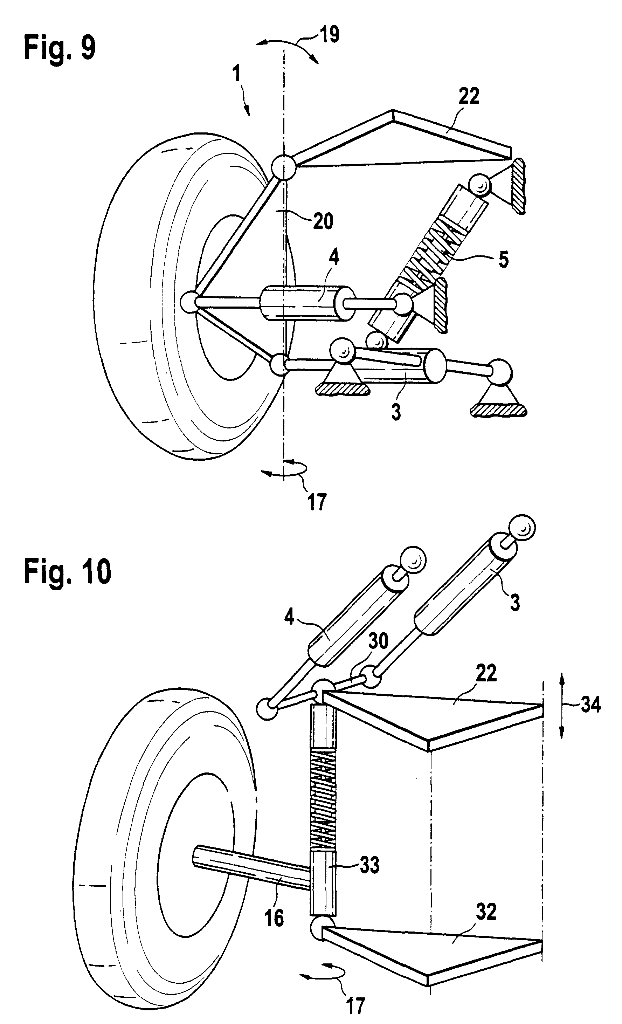

Das in Fig. 9 gezeigte Beispiel zeigt die Realisierung einer einfach redundanten Lenkfunktion. Es sind zwei im wesentlichen horizontal verlaufende Aktuatoren 3, 4 vorgesehen, die karosserieseitig aufgehängt sind und den Dreieckslenker 20 beaufschlagen. Ein weiterer schräg verlaufender Aktuator 5 ist mit dem horizontalen Aktuator 3 mit Abstand zu dessen karosserieseitigen Befestigung verbunden. Das System kann gelenkt werden, es kann einfedern und der Sturz kann eingestellt werden, wobei die Sturzeinstellung unabhängig von der Lenkung erfolgen kann. Eine Lenkung kann gegebenenfalls ausschließlich über einen der drei Aktuatoren erfolgen. Eine Einstellung des Sturzes ist nur über eine gleichzeitige und gleichsinnige Betätigung der beiden horizontalen Aktuatoren 3 und 4 möglich.

Bei einem Defekt des Aktuators 3 oder einem Defekt des Aktuators 4 wird der betreffende Aktuator in Arretierstellung versetzt. Das Rad 2 kann zwar weiterhin gelenkt werden, eine Sturzeinstellung ist jedoch nicht mehr möglich.

Fig. 10 zeigt ein Radmodul mit zwei im wesentlichen parallelen, schräg verlaufenden Aktuatoren 3, 4. Die Aktuatoren 3, 4 beaufschlagen einen oberhalb der Radachse 16 angebrachten Querlenker 30, der mit einem oberen, horizontalen Dreieckslenker 22 und über ein passives Feder-Dämpfer-Element 33 mit einem unteren Dreieckslenker 32 verbunden ist. Das Feder-Dämpfer-Element 33 ist an der Radachse 16 angebracht. Das System besitzt drei Freiheitsgrade: Lenken und Einfedern, wobei diese beiden Bewegungsarten gekoppelt ablaufen, so daß eine Lenkbewegung in Abhängigkeit der Einfederung in eine entsprechende Stellbewegung zur Erzeugung eines Rad-Lenkeinschlags umgesetzt wird, und eine unabhängige Sturzeinstellung.

Im Fehlerfall wird der defekte Aktuator in Gleitstellung versetzt. Die Funktion Lenken kann weiterhin durchgeführt werden, allerdings in Abhängigkeit der Einfederung. Eine Verspannung der Radaufhängung durch asynchron laufende Aktuatoren ist nicht zu erwarten.

Durch Verschiebung des oberen Dreiecklenkers 22 in Richtung des Bewegungspfeils 34 nach oben oder unten kann ebenfalls eine Sturzeinstellung herbeigeführt werden.

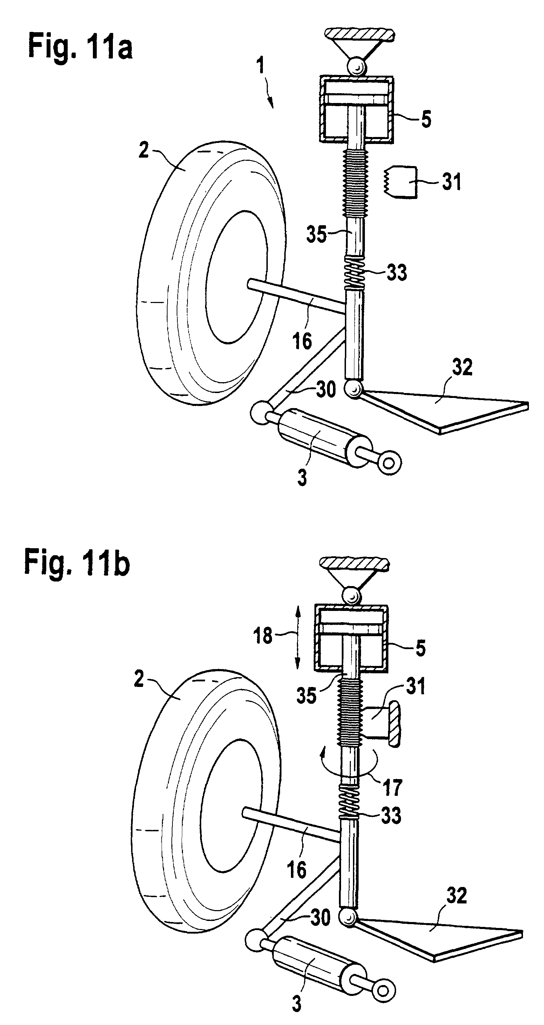

In den Fig. 11a, 11b ist ein weiteres Ausführungsbeispiel dargestellt. Über einen Lenkaktuator 3, der über einen Querlenker 30 auf die Radachse 16 wirkt, wird der Lenkwinkel eingestellt. Ein passives Feder-Dämpfer-Element 33 ist an einem Federbein 35 abgestützt, welches zwischen einer karosserieseitigen Abstützung und einem unteren Dreieckslenker 32 eingespannt ist. Das Feder-Dämpfer-Element 33 ermöglicht als weiteren Freiheitsgrad ein vertikales Einfedern des Rades 2 des Aufhängungssystems 1. Weiterhin ist am oberen Ende des Federbeins 35 ein Aktuator 5 angeordnet, der im Normalfall sowohl arretiert als auch aktiviert werden kann. Bei aktiviertem Aktuator 5 wird die Funktion Einfedern über den Aktuator 5 wahrgenommen, der zusätzlich zum passiven Feder-Dämpfer-Element 33 eingesetzt wird.

Im Fehlerfall - bei einem Ausfall des Lenkaktuators 3 - wird dieser in Gleitstellung verstellt und es wird der vertikale Aktuator 5 aktiviert. Zugleich wird ein Hilfsaktuator 31 an das Federbein 35 herangefahren und mit einem Außengewinde am Federbein 35 in Eingriff gebracht, so daß eine vom Aktuator 5 verursachte Auf- und Abbewegung des Federbeins 35 in Richtung des Bewegungspfeils 18 automatisch eine Drehung des Federbeins 35 bewirkt. Diese Drehbewegung kann gezielt in eine Lenkbewegung gemäß Bewegungspfeil 17 umgesetzt werden, jedoch auf Kosten einer aktiven Federung, die nunmehr ausschließlich von dem passiven Feder-Dämpfer-Element übernommen wird.

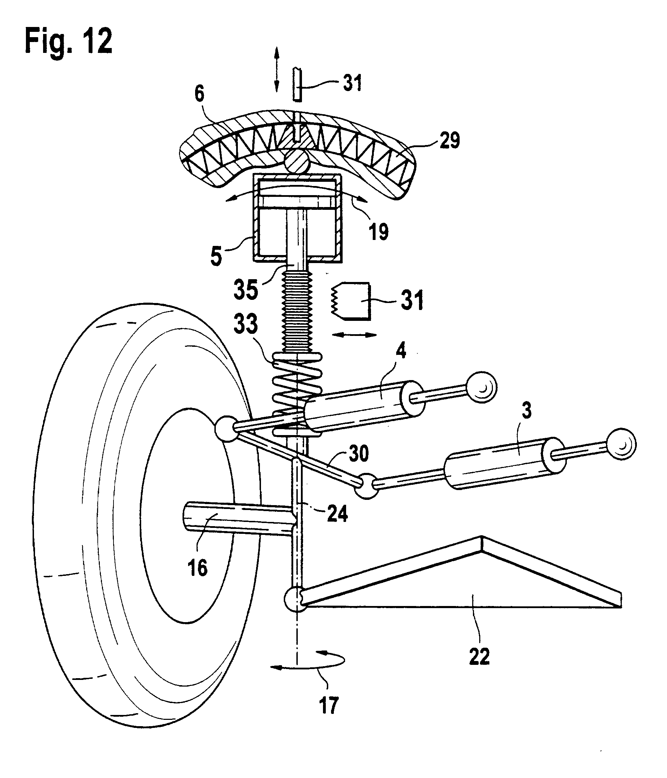

Das Ausführungsbeispiel nach Fig. 12 stellt eine erweiterte Kombination der Beispiele aus Fig. 7 und Fig. 11a, b dar. Es sind zwei parallele, horizontale Aktuatoren 3, 4 vorgesehen, die einen Querlenker 30 beaufschlagen, welcher über die Lenkachse 24 mit der Radachse 16 verbunden ist. Das vertikale Federbein 35 ist mit einem passiven Feder-Dämpfer-Element 33 und einem Aktuator 5 versehen. Weiterhin sind ein Aktuator 6 in der Querführung 29 und zwei Hilfsaktuatoren 31 und 31' vorgesehen. Der erste Hilfsaktuator 31 ist lateral an das Federbein 35 heranschiebbar und greift in Anlagestellung kämmend in ein Außengewinde am Federbein 35 ein. Der zweite Hilfsaktuator 31' greift in Anlagestellung in die Querführung 29 am oberen Ende des Federbeins 35 ein, woraufhin eine Sturzbewegung in Richtung des Bewegungspfeils 19 blockiert wird. Durch Betätigung des Aktuators 6 in der Querführung 29 kann eine Sturzbewegung aktiv hervorgerufen werden.

Im Normalfall kann über die parallelen Aktuatoren 3 und 4 gelenkt und der Sturz eingestellt werden. Über den vertikalen Aktuator 5 kann die Einfederung beeinflußt werden. Der Aktuator 6 wird entweder in Gleitstellung versetzt oder mit der Sturzeinstellung der parallelen Aktuatoren 3 und 4 synchronisiert.

Bei einem Ausfall eines der beiden parallelen Aktuatoren 3 bzw. 4 kann in einer ersten Variante der als Sperrklinke ausgebildete Hilfsaktuator 31' in eine Mittelstellung in der Querführung 29 einrasten, woraufhin mit dem intakten, zweiten parallelen Aktuator gelenkt werden kann. Der defekte Aktuator wird in Gleitstellung versetzt.

In einer zweiten Variante werden Lenken und Sturzeinstellung gekoppelt, indem der defekte Aktuator in Arretierstellung versetzt wird und der Antrieb entweder über den intakten parallelen Aktuator oder über den in der Querführung angeordneten Aktuator 6 erfolgt. In dieser Variante sind Lenken und Sturzverstellung gekoppelt.

Für den Fall, daß beide horizontale, parallele Aktuatoren 3 und 4 ausfallen, wird der Hilfsaktuator 31 in Anlagestellung an das Außengewinde des Federbeins 35 verfahren und der Hilfsaktuator 31' in Blockierstellung in die Querführung 29 eingeführt. Eine vom Aktuator 5 ausgeführte Vertikalbewegung wird infolge des kämmenden Eingriffs des Hilfsaktuators 31 in das Außengewinde am Federbein 35 in eine Lenkbewegung umgesetzt.

Durch den Einsatz der zusätzlichen Hilfsaktuatoren 31 und 31' wird eine dreifach redundante Lenkung erreicht.

## Patentansprüche

1. Regelbares Aufhängungssystem für ein aktives Fahrwerk eines Kraftfahrzeugs, mit mindestens zwei Aktuatoren (3, 4), die über Stellsignale (S_{St}) zur Beeinflussung der Relativbewegung zwischen einem Rad (2) des Kraftfahrzeugs und dem Fahrzeugaufbau einstellbar sind, und mit einer Regeleinheit (9) zur Erzeugung der Stellsignale (S_{St}) in Abhängigkeit von Fahrzeug-Zustandsgrößen repräsentierenden Eingangssignalen (S_{E}), wobei
die von den beiden Aktuatoren (3, 4) erzeugbaren, auf das Rad (2) wirkenden Stellbewegungen parallele Richtungskomponenten aufweisen, **dadurch gekennzeichnet,**
- **daß** die Regeleinheit (9) im Fehlerfall bei einem Defekt eines Aktuators (3, 4) die Aktuatoren (3, 4) verkoppelnde Stellsignale (S_{St}) in der Weise erzeugt, daß der Freiheitsgrad des defekten Aktuators (3,4) über den zweiten Aktuator (4, 3) eingestellt wird.

2. Aufhängungssystem nach Anspruch 1,
**dadurch gekennzeichnet,**
**daß** die beiden Aktuatoren (3, 4) in einer Ebene liegen.

3. Aufhängungssystem nach Anspruch 2,
**dadurch gekennzeichnet,**
**daß** die beiden in einer Ebene liegenden Aktuatoren (3, 4) winklig zueinander angeordnet sind und einen gemeinsamen Schnittpunkt aufweisen.

4. Aufhängungssystem nach Anspruch 2,
**dadurch gekennzeichnet,**
**daß** die beiden Aktuatoren (3, 4) parallel zueinander liegen.

5. Aufhängungssystem nach einem der Ansprüche 1 bis 4,
**dadurch gekennzeichnet,**
**daß** ein Dreiecklenker (20) am Rad (2) vorgesehen ist und die Eckpunkte des Dreiecklenkers (20) von zwei Kraftangriffspunkten (13, 15) der beiden Aktuatoren (3, 4) und einem weiteren Anlenkpunkt (21) gebildet sind.

6. Aufhängungssystem nach einem der Ansprüche 1 bis 5,
**dadurch gekennzeichnet,**
**daß** im Fehlerfall die Funktion des defekten Aktuators (3, 4) zusätzlich zur Primärfunktion des zweiten Aktuators (4, 3) übernommen wird.

7. Aufhängungssystem nach einem der Ansprüche 1 bis 5,
**dadurch gekennzeichnet,**
**daß** im Fehlerfall die Primärfunktion des zweiten Aktuators (4, 3) ausschaltbar ist und der zweite Aktuator (4, 3) die Funktion des defekten Aktuators (3, 4) übernimmt.

8. Aufhängungssystem nach einem der Ansprüche 1 bis 7,
**dadurch gekennzeichnet,**
**daß** die Kraftangriffspunkte (13, 15) von zwei zusammenwirkenden Aktuatoren (3, 5; 4, 6) jeweils mit Abstand zur Lenkachse (24) angeordnet sind.

9. Aufhängungssystem nach Anspruch 8,
**dadurch gekennzeichnet,**
**daß** die Kraftangriffspunkte (13, 15) der zwei zusammenwirkenden Aktuatoren (3, 5; 4, 6) jeweils mit Abstand zu einer weiteren Rad-Drehachse angeordnet sind.

10. Aufhängungssystem nach Anspruch 8 oder 9,
**dadurch gekennzeichnet,**
**daß** im Fehlerfall Stellsignale (S_{St}) in der Weise erzeugbar sind, daß mittels des verbliebenen intakten Aktuators (3, 4) der Lenkwinkel einstellbar ist.

11. Aufhängungssystem nach einem der Ansprüche 8 bis 10,
**dadurch gekennzeichnet,**
**daß** über die beiden Aktuatoren (3, 4) der Lenkwinkel und der Sturz eines Rades (2) manipulierbar sind.

12. Aufhängungssystem nach einem der Ansprüche 8 bis 11,
**dadurch gekennzeichnet,**
**daß** über die beiden Aktuatoren (3, 4) der Lenkwinkel und die Spur eines Rades (2) manipulierbar sind.

13. Aufhängungssystem nach einem der Ansprüche 8 bis 12,
**dadurch gekennzeichnet,**
**daß** über die beiden Aktuatoren (3, 4) der Lenkwinkel und der Hub des Aufbaus gegenüber einem Rad (2) manipulierbar sind.

14. Aufhängungssystem nach einem der Ansprüche 1 bis 13,
**dadurch gekennzeichnet,**
**daß** der defekte Aktuator (3, 4) im Fehlerfall arretierbar ist.

15. Aufhängungssystem nach einem der Ansprüche 1 bis 13,
**dadurch gekennzeichnet,**
**daß** der defekte Aktuator (3, 4) im Fehlerfall in Gleitstellung gehalten ist.

16. Aufhängungssystem nach einem der Ansprüche 1 bis 15,
**dadurch gekennzeichnet,**
**daß** mehr als zwei Aktuatoren (3, 4, 5, 6) vorgesehen sind, wobei der Kraftvektor jedes Aktuators (3, 4, 5, 6) eine Kraftkomponente aufweist, die parallel zu einer Kraftkomponente von mindestens einem der anderen Aktuatoren (3, 4, 5, 6) liegt.

17. Aufhängungssystem nach einem der Ansprüche 1 bis 16,
**dadurch gekennzeichnet,**
**daß** die Aktuatoren (3, 4, 5, 6) als Zylinder-Kolben-Verstelleinrichtung ausgebildet sind.

## Claims

1. Adjustable suspension system for an active chassis of a vehicle, with at least two actuators (3, 4) that can be adjusted by means of control signals (S_{St}) to influence the relative movement between a wheel (2) of the vehicle and the body of the vehicle, and with a control unit (9) to produce the control signals (S_{St}) as a function of input signals (S_{E}) that represent vehicle condition parameters, such that the control movements which can be produced by the two actuators (3, 4) and which act on the wheel (2) have parallel direction components,
**characterised in that**
in the event of a fault when one of the actuators (3, 4) is defective, the control unit (9) produces the control signals (S_{St}) which couple the actuators (3, 4) in such manner that the degree of freedom of the defective actuator (3, 4) is adjusted by the second actuator (4, 3).

2. Suspension system according to Claim 1,
**characterised in that**
the two actuators (3, 4) are positioned in the same plane.

3. Suspension system according to Claim 2,
**characterised in that**
the two actuators (3, 4) in a common plane are arranged at an angle to one an other and have a common intersection point.

4. Suspension system according to Claim 2,
**characterised in that**
the two actuators (3, 4) are parallel to one another.

5. Suspension system according to any of Claims 1 to 4,
**characterised in that**
a wishbone (20) is provided on the wheel (2) and the apices of the wishbone (20) are formed by two force application points (13, 15) of the two actuators (3, 4) and a further articulation point (21).

6. Suspension system according to any of Claims 1 to 5,
**characterised in that**
in the event of a fault the function of the defective actuator (3, 4) is taken over in addition to the primary function of the second actuator (4, 3).

7. Suspension system according to any of Claims 1 to 5,
**characterised in that**
in the event of a fault the primary function of the second actuator (4, 3) can be blocked and the second actuator (4, 3) takes over the function of the defective actuator (3, 4).

8. Suspension system according to any of Claims 1 to 7,
**characterised in that**
the force application points (13, 15) of two cooperating actuators (3, 5; 4, 6) are in each case arranged a distance away from the steering axis (24).

9. Suspension system according to Claim 8,
**characterised in that**
the force application points (13, 15) of the two cooperating actuators (3, 5; 4, 6) are each arranged a distance away from a further wheel rotation axis.

10. Suspension system according to Claims 8 or 9,
**characterised in that**
in the event of a fault control signals (S_{St}) can be produced in such manner that the steering angle can be adjusted by means of the remaining, intact actuator (3, 4).

11. Suspension system according to any of Claims 8 to 10,
**characterised in that**
the steering angle and the camber of a wheel (2) can be manipulated by means of the two actuators (3, 4).

12. Suspension system according to any of Claims 8 to 11,
**characterised in that**
the steering angle and the tracking of a wheel (2) can be manipulated by means of the two actuators (3, 4).

13. Suspension system according to any of Claims 8 to 12,
**characterised in that**
the steering angle and the suspension stroke of the vehicle body relative to a wheel (2) can be manipulated by means of the two actuators (3, 4).

14. Suspension system according to any of Claims 1 to 13,
**characterised in that**
in the event of a fault the defective actuator (3, 4) can be locked.

15. Suspension system according to any of Claims 1 to 13,
**characterised in that**
in the event of a fault the defective actuator (3, 4) is held in its freely sliding position.

16. Suspension system according to any of Claims 1 to 15,
**characterised in that**
more than two actuators (3, 4, 5, 6) are provided, and the force vector of each actuator (3, 4, 5, 6) has a force component directed parallel to a force component of at least one of the other actuators (3, 4, 5, 6).

17. Suspension system according to any of Claims 1 to 16,
**characterised in that**
the actuators are in the form of cylinder-piston adjustment devices.

## Revendications

1. Système de suspension réglable pour un châssis actif d'un véhicule automobile, comprenant au moins deux actionneurs (3, 4) qui sont réglables par des signaux de réglage (S_{St}) servant à influencer le mouvement relatif se produisant entre une roue (2) du véhicule automobile et la structure du véhicule, et une unité de réglage (9) servant à produire les signaux de réglage (S_{St}) en fonction de signaux d'entrée (S_{E}) représentant des variables d'état du véhicule, où les mouvements de réglage agissant sur la roue (2) et pouvant être produits par les deux actionneurs (3, 4) présentent des composantes directionnelles,
**caractérisé en ce que** l'unité de réglage (9), en cas de panne, produit des signaux de réglage (S_{St}) couplant les actionneurs (3, 4) lors d'une défaillance d'un actionneur (3, 4), de manière telle que le degré de liberté de l'actionneur défectueux (3, 4) est réglé par le second actionneur (4, 3).

2. Système de suspension selon la revendication 1, **caractérisé en ce que** les deux actionneurs (3, 4) se trouvent dans un plan.

3. Système de suspension selon la revendication 2, **caractérisé en ce que** les deux actionneurs (3, 4) se trouvant dans un plan sont disposés de façon angulaire l'un par rapport à l'autre et présentent un point d'intersection commun.

4. Système de suspension selon la revendication 2, **caractérisé en ce que** les deux actionneurs (3, 4) sont parallèles l'un à l'autre.

5. Système de suspension selon l'une quelconque des revendications 1 à 4, **caractérisé en ce qu'**un bras de suspension triangulaire (20) est prévu sur la roue (2) et les points angulaires du bras de suspension triangulaire (20) sont formés par deux points d'attaque du véhicule (13, 15) des deux actionneurs (3, 4) et par un autre point d'articulation (21).

6. Système de suspension selon l'une quelconque des revendications 1 à 5, **caractérisé en ce que**, en cas de panne, la fonction de l'actionneur défectueux (3, 4) est assurée en plus de la fonction primaire du second actionneur (4, 3).

7. Système de suspension selon l'une quelconque des revendications 1 à 5, **caractérisé en ce que**, en cas de panne, la fonction primaire du second actionneur (4, 3) est déconnectable et le second actionneur (4, 3) assure la fonction de l'actionneur défectueux (3, 4).

8. Système de suspension selon l'une quelconque des revendications 1 à 7, **caractérisé en ce que** les points d'attaque du véhicule (13, 15) de deux actionneurs (3, 5 ; 4, 6) fonctionnant ensemble sont disposés en étant respectivement espacés par rapport à l'essieu directeur (24).

9. Système de suspension selon la revendication 8, **caractérisé en ce que** les points d'attaque du véhicule (13, 15) des deux actionneurs (3, 5 ; 4, 6) fonctionnant ensemble sont disposés en étant respectivement espacés par rapport à un autre axe de rotation de la roue.

10. Système de suspension selon la revendication 8 ou 9, **caractérisé en ce que**, en cas de panne, des signaux de réglage (S_{St}) peuvent être produits de manière telle, que l'angle de braquage est réglable au moyen de l'actionneur (3, 4) resté intact.

11. Système de suspension selon l'une quelconque des revendications 8 à 10, **caractérisé en ce que** l'angle de braquage et le carrossage d'une roue (2) sont manipulables par les deux actionneurs (3, 4).

12. Système de suspension selon l'une quelconque des revendications 8 à 11, **caractérisé en ce que** l'angle de braquage et le pincement d'une roue (2) sont manipulables par les deux actionneurs (3, 4).

13. Système de suspension selon l'une quelconque des revendications 8 à 12, **caractérisé en ce que** l'angle de braquage et la course de la structure par rapport à une roue (2) sont manipulables par les deux actionneurs (3, 4)

14. Système de suspension selon l'une quelconque des revendications 1 à 13, **caractérisé en ce que** l'actionneur défectueux (3, 4) peut être arrêté en cas de panne.

15. Système de suspension selon l'une quelconque des revendications 1 à 13, **caractérisé en ce que** l'actionneur défectueux (3, 4), en cas de panne, est maintenu en position de glissement.

16. Système de suspension selon l'une quelconque des revendications 1 à 15, **caractérisé en ce qu'**il est prévu plus de deux actionneurs (3, 4, 5, 6), où le vecteur de force de chaque actionneur (3, 4, 5, 6) présente une composante de force qui est parallèle à une composante de force d'au moins l'un des autres actionneurs (3, 4, 5, 6).

17. Système de suspension selon l'une quelconque des revendications 1 à 16, **caractérisé en ce que** les actionneurs (3, 4, 5, 6) sont conçus comme un dispositif de réglage à piston et à cylindre.
